Europäisches Patentamt

(19) European Patent Office     (11) Publication number: 0 073 895

Office européen des brevets     A1

(12) EUROPEAN PATENT APPLICATION

(21) Application number: 82106002.7     (51) Int. Cl.³: B 01 D 46/24
                                              B 01 D 46/42
(22) Date of filing: 05.07.82

(30) Priority: 28.08.81 US 297112

(43) Date of publication of application:
16.03.83 Bulletin 83/11

(84) Designated Contracting States:
BE DE FR GB

(71) Applicant: GRAHAM-WHITE SALES CORPORATION
P.O. Box 1099
Salem, VA 24153(US)

(72) Inventor: Frantz, Virgil L.
P.O. Box 1099
Salem, VA 24153(US)

(74) Representative: Kraus, Walter, Dr. et al,
Patentanwälte Dres. Kraus & Weisert Irmgardstrasse 15
D-8000 München 71(DE)

(54) Apparatus for decontaminating compressed gas.

(57) Apparatus for decontaminating compressed gas having a housing (2) and alternating between decontaminating or filter and purge or regenerating cycles for respectively separating contaminants from compressed gas passing through the housing and purging the housing of separated contaminants, the housing containing a coalescer unit (37) so disposed and constructed as to coalesce fine particles of and separate oil from the compressed gas during a decontaminating cycle and be purged of separated oil by gravity drainage during decontaminating and purge cycles and a reverse flow of purge gas during a purge cycle, the housing having valved inlet (3) and outlet (4) ports for receiving contaminated and discharging decontaminated compressed gas and a bottom drain port (6) for draining separated contaminants, and an internal drain valve (15) in the housing for opening and closing the drain port, the drain valve being normally held closed during a decontaminating cycle by the pressure of compressed gas in the housing and opened by actuating gas applied thereto during a purge cycle.

# Background of the invention

If, as usual, produced by an oil-lubricated compressor, compressed gas almost inevitably contains as major contaminants moisture present in the air drawn in by the compressor and oil escaping past the compressor's piston rings, and part of the oil usually is a gaseous phase fine mist or aerosol of a particle size so fine as to pass through a paper or like conventional oil filter. In decontaminating apparatus of the non-desiccant type, such as disclosed in Frantz patent No. 3,402,529, the effect of unseparated oil is external of the apparatus in tending to clog or contaminate air brakes or other devices operated by decontaminated gas discharged from the apparatus. However, in decontaminating apparatus of the desiccant or filter-dryer type, in which moisture is adsorbed within the apparatus, most suitably by a porous particulate desiccant, such as molecular sieves having pores of a size to pass water molecules, since oil molecules are larger, if the gas being filtered reaches the desiccant with entrained oil, the effect of the fine oil particles is to coat and plug the pores of the desiccant particles and rapidly reduce the efficiency of the desiccant to adsorb moisture. For some time it has been the practice to regenerate a particulate desiccant at intervals by a reverse flow of decontaminated or filtered gas under reduced pressure but such regeneration is ineffective when the desiccant has become coated with oil.

Fine mist and larger oil particles entrained in a gas can be removed by passing the gas through an oil separator having a coalescer element for coalescing the fine mist into larger particles and using the same or a separate filter element for collecting the oil particles. While such oil separators, using for coalescing a suitable medium, such.as randomly arranged coated glass fibers, ordinarily are available as disposable separate units, Kasten in U.S.

No. 3,796,025, proposes to protect a moisture-adsorbing desiccant of a compressed gas filter unit from contamination by entrained oil particles by passing the gas in advance or upstream of the desiccant through first a horizontal coalescer element and then a separate filter element and positions the filter element for purging by the reverse flow of filtered gas used for regenerating the desiccant, while depending entirely upon gravity for draining oil from the coalescer element. The problem this poses is that gravity drainage alone does not effectively remove oil from the coalescing element, with the result that a coalescing element, such as Kasten's, in time will become saturated with oil and lose its initial efficiency.

Regardless of the type, apparatus for decontaminating compressed gas has heretofore been equipped with a drain valve external of the housing. If, as usual, the housing has a bottom drain port, below or adjacent which the external drain valve is mounted, the drain valve and any associated external piping are fully exposed and in diesel locomotives or other vehicle installations, are unprotectable by the housing against possible damage, as by foreign objects forcibly displaced from a road or roadbed.

It is to solutions to the above problems in prior decontaminating apparatus that the present invention is particularly directed.

## Summary of the Invention

The primary object of the present invention is to provide an improved apparatus for decontaminating compressed gas having a housing and alternating between decontaminating and purge cycles, wherein an oil separator including a coalescing element separates entrained fine mist and larger oil particles from the gas during a decontaminating cycle and is purged of the separated oil by gravity drainage and by a reverse flow of gas during a purge cycle.

Another object of the invention is to provide improved apparatus for decontaminating compressed gas having a housing and alternating between decontaminating and purge cycles, wherein the housing contains for separating oil from the gas primary and secondary oil separating units through which the compressed air is passed in succession for separating entrained oil therefrom during a decontaminating cycle and each unit is exposed for purging of separated oil by a reverse flow of purge gas during a purge cycle.

A further object of the invention is to provide improved apparatus for decontaminating compressed gas, wherein a housing of the apparatus has a bottom drain port for draining contaminants and contains an internal drain valve normally closing the drain port in response to pressure of gas passing through the housing and responding to separately applied actuating gas for cyclically opening the drain port.

Another object of the invention is to provide improved apparatus for decontaminating compressed gas having a housing and alternating between decontaminating and purge cycles, the housing having valved inlet and outlet ports and a bottom drain port closed during a decontaminating cycle by a drain valve under pressure of air passing through the housing, wherein the drain valve is cyclically opened under timer control by actuating gas applied to the drain valve through a vertically disposed actuating air tube suspended from an upper part of the housing and extending downwardly therefrom coaxially with a central bore of the housing to the drain valve and mounting and supporting above the drain valve an oil separator unit for separating fine mist and larger oil particles from compressed gas undergoing decontamination.

A further object of the invention is to provide improved decontaminating apparatus for compressed gas of the character described in the immediately preceding object, including a canister compactor assembly mounted in the central bore of the housing above and downstream of the oil separator unit and containing a particulate desiccant for adsorbing moisture in the gas during a decontaminating cycle and wherein during a purge cycle timer-controlled solenoid-actuated valving applied decontaminated actuating gas for closing the inlet port and opening the drain valve.

The foregoing and other objects and advantages of the invention will appear hereinafter in the detailed description, be particularly pointed out in the appended claims and be illustrated in the accompanying drawings, in which:

Figure Description

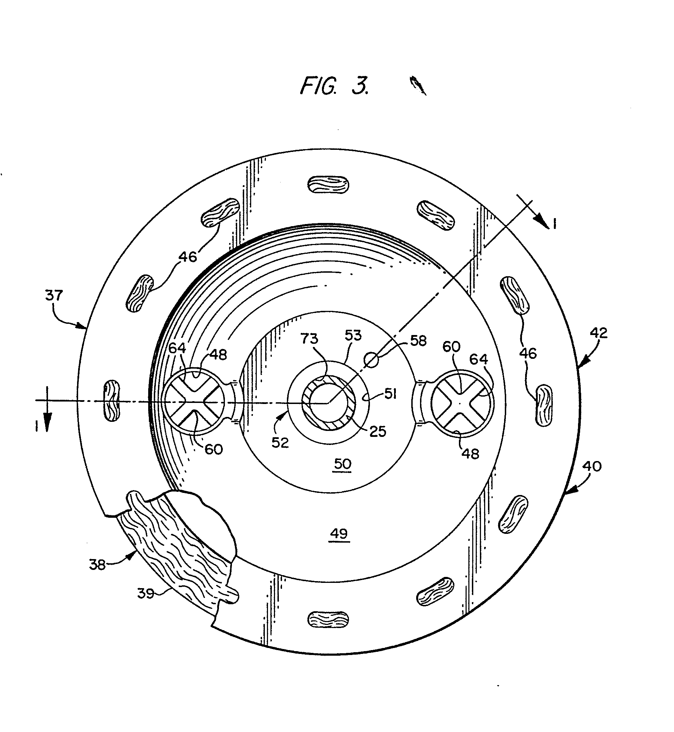

Figure 1 is a vertical sectional view of a preferred embodiment of the decontaminating apparatus of the present invention with the section for the oil separator unit of the apparatus taken along lines 1-1 of Figure 3;

Figure 2 is a vertical sectional view of a second embodiment of the improved apparatus of the present invention, taken along the same section as Figure 1;

Figure 3 is an enlarged fragmentary sectional view taken along lines 3-3 of Figure 1;

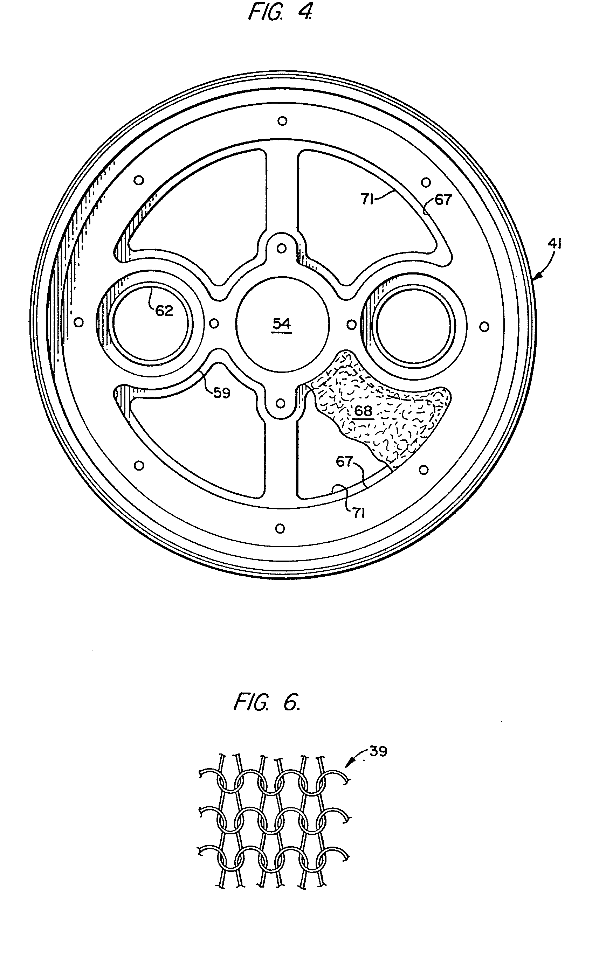

Figure 4 is a top plan view of the upper member of the mounting of the oil separator removed from the housing;

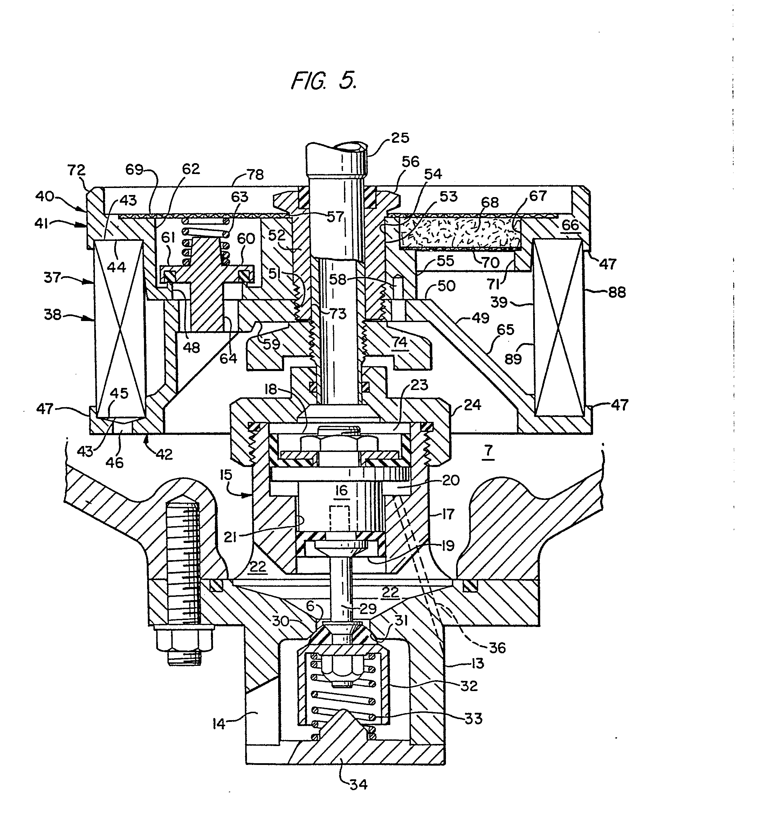

Figure 5 is an enlarged fragmentary view of the common lower portion of the apparatus of Figures 1 and 2, and

Figure 6 is a further enlarged fragmentary view showing the knitted wire mesh construction of the coalescer unit of the improved apparatus.

Detailed Description

Referring now in detail to the drawings in which like reference characters designate like parts, the improved apparatus of the present invention for decontaminating compressed air or other gas is particularly adapted for use in installations in which the compressed gas received in a housing of the apparatus is contaminated with a fine mist and larger particles of oil and the apparatus is controlled to alternate between decontaminating and purging cycles, the former for separating at least the oil from the received gas and the latter for removing the oil and any other separated contaminants from the housing. The improved apparatus not only may contain in its housing separating media for other contaminants, such as a particulate desiccant for adsorbing moisture, but for bottom-draining housings, also enables a bottom drain port to be cyclically opened and closed by an internal gas-operated drain valve.

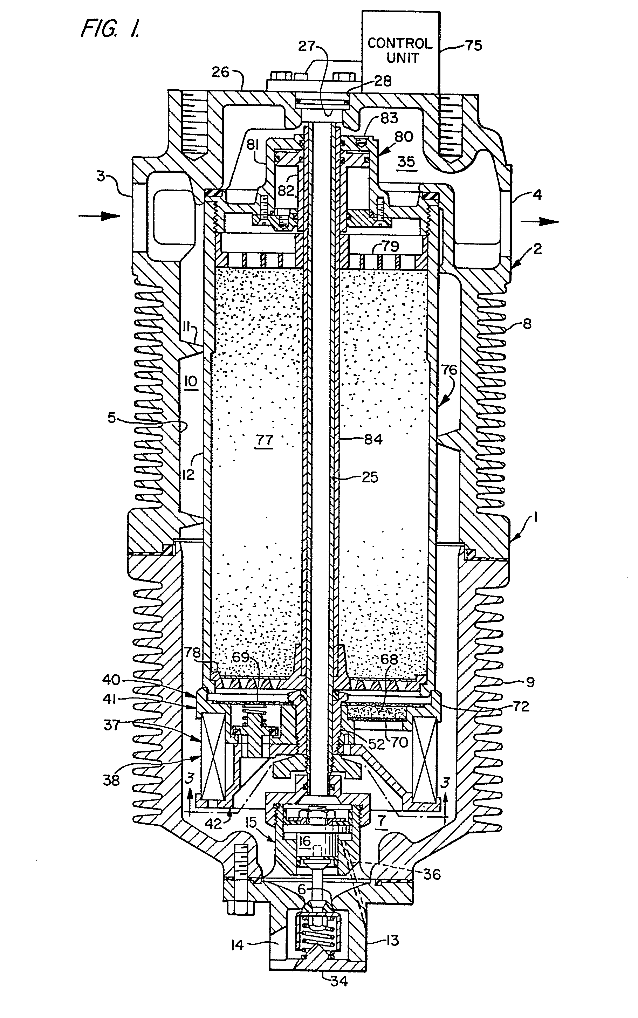

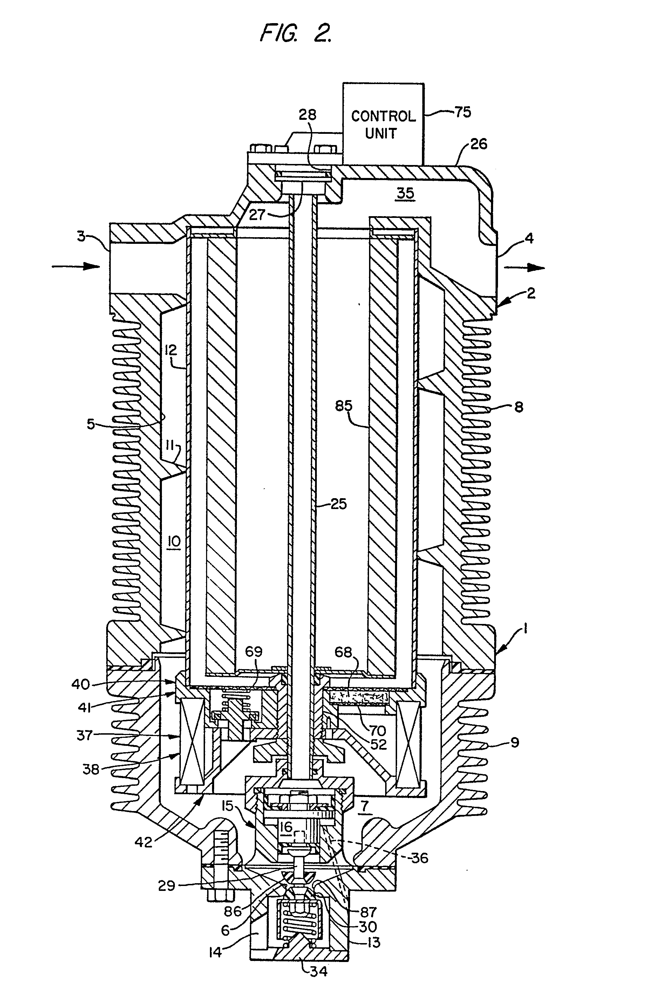

As exemplary of the invention, two embodiments of the improved apparatus have been illustrated, one in Figure 1, of the desiccant type for drying the gas by adsorbing entrained moisture, the other in Figure 2, of the non-desiccant type. In both embodiments, the improved apparatus, designated as 1, is comprised of a suitably vertically disposed housing or tower 2 having, conveniently on opposite sides adjacent to its top, an inlet port 3 and an outlet port 4 opening respectively onto and from a vertical, preferably cylindrical central or axial bore or cavity 5, and a bottom-opening drain port 6 opening downwardly from a sump 7 at the bottom of the central bore. Divided vertically into upper and lower parts 8 and 9, respectively, releasably attached or connected, as by bolting, the housing 2 preferably is made of aluminum or a like high conductivity metal with both parts externally finned for effective heat dissipation. The inlet port 3 preferably opens inwardly onto a downwardly directed helical passage 10 formed by a helical rib 11 instanding from the upper part 8 between confronting sides or

- 7 -

0073895

faces of that part and a suitably cylindrical canister or container 12 seating in the central bore 5 and extending downwardly into the lower part 9 and blocking direct flow of compressed gas between the inlet port and the outlet port 4.

The inlet and outlet ports 3 and 4 conveniently are valved by external or exterior, normally open valves (not shown), suitably such as shown in Frantz Patent No. 4,097,248, of which, as in that patent, the outlet port valve conveniently is closable by back pressure and the inlet port valve by the pressure of actuating gas applied thereto. The preferred drain port 6 is formed in a bottom cap or cover 13 releasably attached, as by bolting, to and concentric or coaxial with and depending from and forming a lower extension of the lower part 9 and suitably having below the drain port a side opening 14 for discharging any matter drained through the drain port.

By contrast with the inlet and outlet ports 3 and 4, the drain port 6 in both embodiments preferably is opened and closed by an internal drain valve 15 mounted and contained in the housing 2. Normally closed and operated by compressed gas in both opening and closing, the preferred drain valve 15 has for gas operation a differential piston 16 mounted concentrically or coaxially of the housing 2 and its central bore 5 in connected upwardly and downwardly opening cylindrical chambers or compartments of different diameter in a compartmented hollow boss 17 integral with and upstanding from the bottom cap 13 into the housing's lower part 9. Both suitably gasketed, an upper, upwardly facing larger head 18 and a lower, downwardly facing smaller head 19 of the differential piston 16 reciprocably ride or slide and sealingly engage sides respectively of the correspondingly larger upper compartment or chamber 20 and smaller or lower compartment or chamber 21 of the boss 17.

Of the two chambers in the boss 17, the lower chamber 21 opens downwardly onto the sump 7 through a plurality of downwardly sloping radial passageways 22 leading from the sump to the drain port 6, while the upper chamber 20 has its otherwise open upper end closed to form a pressure chamber 23 for actuating gas above the upper head 18 by a cap or cover 24 screwed, with suitably O-ring sealing, over the upper end of the boss 17 and centrally apertured for sealingly receiving or seating and anchoring a lower end of an actuating gas supply pipe 25. Extending vertically or axially of the central bore 5 upwardly from the boss cap 24 through the top wall 26 of the housing 2, the supply pipe 25 is suspended from and anchored to that wall by having fixed to or fitted on or over its upper end or end portion an enlarged annular head or collar 27 sealingly seated or received in an upwardly open socket 28 in the top wall.

Acting upwardly in normally closing the drain port 6, the drain valve 15 for the purpose has a rod or shaft 29 suitably screwed into the lower head 19 of the differential piston 16 and projecting downwardly therefrom through the drain port 6 and mounting therebelow a preferably tapered valve head or element 30. Adapted to seat against or engage a downwardly facing valve seat 31 surrounding or encircling the drain port 6, the valve head 30 in seated or port-closed position, presents or exposes to the pressure of compressed gas in the housing 2 a lesser area than exposed or presented to that gas by the lower piston head 19. A conveniently inverted cup-shaped washer 32 secured to the lower end of the piston rod 29 holds the valve head 30 on the rod and shields from matter drained through the drain port when the port is open, a relatively light spring 33 acting upwardly between the washer and a bottom wall 34 of the bottom cap 13 for holding the drain valve 15 closed when, as during start-up, the pressure of gas in the housing 2 of the lower head 19 of the differential piston 16 is too low to serve that purpose.

As previously mentioned, the improved decontaminating apparatus of both embodiments in operation alternates cyclically under timer or other suitable control between decontaminating or filter and purge or regenerating cycles, in the former of which the inlet and outlet ports 3 and 4 are open and the drain port 6 closed and contaminated compressed gas received through the inlet port is decontaminated in passing through the housing 2 before being discharged from the outlet port 4. During the decontaminating cycle, the initially contaminated compressed air, usually received hot at the inlet port 3 from an associated compressor, is first subjected to centrifugal separation by passing downwardly through the helical passage 10 and therebelow at or adjacent the sump 7, is reversed in direction for upward flow and further decontaminating before being discharged through an outlet passage 35 in the upper part of the housing 2 leading to the outlet port 4. In a purge cycle, the drain port 6 is open and any contaminants separated in the preceding decontaminating cycle are drained or ejected from the housing 2 through the drain port under force of a reverse flow of purge gas.

In the above cyclic operation, the illustrated drain valve 15 during a decontaminating cycle is shut off from a supply of actuating gas through the supply pipe 25 and the resultant upward force exerted by the compressed gas in and flowing through the housing 2 on the lower head 19 of the differential piston 16, and the consequent upward action of the piston on the valve head 30, holds the drain valve in closed position with the valve head seating upwardly against the downwardly facing valve seat 31 encircling the outlet port, assisted as needed by the upward force applied to the valve head by the spring 33. Conversely, during a purge cycle, the actuating gas, preferably at the pressure of the gas passing through the housing 2 during a decontaminating cycle, is supplied through the supply pipe 25 to the pressure chamber 23 between the upper piston head 18 and the cap 24 and, as a result of the greater exposed area of the upper piston head than the lower piston head 18, applies a downward force to the differential piston 16, causing the piston to move downwardly and by the corresponding downward movement of the head 30, unseat the latter from the seat 31 and open the outlet port 6, with resistance to the downward movement by gas in the upper chamber 20 below the upper head 18 prevented by venting that gas to atmosphere through a vent passage 36 in the housing's bottom cap 13.

In both embodiments, the housing 2 contains in the lower part of the bore 5, suitably between the sump 7 and canister or container 12 and below or upstream of the canister and any decontaminating medium or media contained therein, an oil separator or separator unit 37. Adapted to separate from the gas passing through the housing 2 in a decontaminating cycle fine mist and larger particles of oil entrained in the gas, the oil separator 37, has, as its primary or sole separating element for both coalescing any oil particles so fine as to be dispersed in the gas as fine oil mist or aerosol, into larger particles and collecting both the coalesced and initially larger oil particles, a coalescer unit 38. Vertically disposed in and concentric or coaxial with the central bore 5, the coalescer unit 38 preferably is an open-ended hollow cylinder or cylindrical tube having as its separating element a porous or perforate side wall 39, formed of a suitable oil coalescing and separating medium, such as plural or multi-layered wire mesh. Desirably of uniform thickness and flat and parallel-ended, the side wall 39 of the preferred cylindrical coalescer unit 38 is formed of a flattened tube of suitable length and width, tubularly knitted of stainless steel or other non-corrosive wire and conveniently wound on itself and then compressed into a tube or hollow cylinder of the desired final thickness, with incidental crimping or corrugating where increased resiliency and interfitting or interlocking of the layers against relative linear movement is desired.

With its side wall or side 39 formed of multi-layered knitted wire mesh, the preferred coalescer unit 37 creates tortuous paths for flow of gas through it, along which any particles of liquid or solid matter entrained in the gas impinge or impact upon or bounce off numerous wires and by such impingement cause fine particles dispersed in the gas fine mist or aerosol to coalesce into larger particles or droplets. The void volume or percentage of a knitted wire screen of a given volume, the complement of its density in terms of percent of volume of metal and determinative of the capacity of layered knitted mesh of a given volume to collect, trap or contain separated particles, such as oil, is predetermined by the size of the openings of the mesh and the extent to which the mesh is compressed and, to function as intended as the coalescer unit 38 of the oil separator 37, the preferred density is in the range of 20-30%.

In the decontaminating apparatus of the present invention, the oil separator 37 has or includes a mounting or mounting frame 40 removably mounted, concentrically or coaxially, in the central bore 5 between the sump 7 and the canister 12 and coaxially or concentrically mounting the preferred cylindrical tube coalescer unit 38. Formed of connected upper or cover and lower or base members 41 and 42, respectively, the mounting 40 mounts the coalescer unit 38 between those members with the preferred flat and parallel opposite ends 43 of the unit seated or received in confronting, vertically spaced and aligned annular upper or downwardly facing and lower or upwardly facing seats 44 and 45, respectively, on or in outer, radially outstanding flange or web portions of the upper and lower members. Of the seats in the mounting 40, the lower seat 45 is interrupted vertically by a plurality of circumferentially spaced, suitably oval drain holes or openings 46 leading downwardly to the sump 7 and, as in the illustrated embodiments, the upper and lower seats suitably are channels or grooves bounded outwardly by respectively downstanding
and upstanding peripheral or rim flanges 47.  Except for the
drain holes 46 and one or more normally closed bypass ports ·
48, the base member 43 is closed at the bottom, suitably by
an upstanding frusto-conical intermediate web 49 extending
inwardly and upwardly from the lower seat 45 and terminating upwardly in a central, circular or annular flat plate
or hub or hub portion 50 centered on the mounting 40 and
interrupted vertically by a threaded central aperture 51.

The upper and lower members 41 and 42 of the mounting are connected against relative vertical and rotative
movement, releasably, in the illustrated embodiments, by a
headed connecting bolt 52 having a partly smooth shank 53
slidable from above through a smooth axial or vertical central
bore or aperture 54 in a hub 55 of the upper member and therebelow screwed or threaded into the threaded central aperture 51 in the lower member, with the bolt's head 56 and,
more precisely, a shoulder 57 on the shank immediately
below the head, engaging or abutting against an upper end
or surface of the upper member's hub.  The upper and lower
members 41 and 42 are also desirably keyed against relative
rotation, as by a rollpin 58 extending vertically through
the lower member's hub 50 and into the upper member's hub
55 outwardly of the central apertures 51 and 54 therein.

For the high c.f.m. flow of contaminated compressed
gas to and through the inlet port 3, for which the apparatus
of the illustrated embodiments is particularly designed, the
oil separator 37 of each embodiment suitably has a diametrically opposed pair of the bypass ports 48 formed in
and extending vertically through the frusto-conical web 49
of the lower member 42 intermediate or between the lower
coalescer seat 45 on and the hub 50 of that member and extending upwardly into an intermediate web portion 59 of
the upper member 41.  Each of the bypass ports 48 normally
is closed within the upper member 41 by a bypass valve 60
having a gasketed head 61 seated or received in an upwardly opening socket 62 in the web portion 59. Normally yieldably held in closed position by a return spring 63 acting downwardly on its head 61, each bypass valve is guided in its vertical reciprocal movement by a shank 64 depending from its head and sliding in the part of the bypass port 48 in the lower member 42, with the shank conveniently of cruciform shape to pass gas when the related port is open.

With the upper surface 65 of the frusto-conical intermediate web portion 49 of the lower mounting member 42 conveniently forming a conical baffle plate for directing gas upwardly from and downwardly toward the coalescer unit 38, the upper mounting member 41 has in its intermediate web portion 59, rigidly connecting its hub 55 to its rim or peripheral portion 66, circumferentially between or on opposite sides of the bypass valve sockets 62, a pair or plurality of vertically opening through-aperatures or openings 67 for alternately passing gas from and to the coalescer unit 38 in opposite vertical directions. As double assurance that any oil initially entrained in the contaminated gas received through the inlet port 3 will be separated by and not pass upwardly from the oil separator 37, except for a trace of oil desirable for lubricating devices operated by the decontaminated gas discharged from the housing's outlet port 4, each of the openings 67 may have seated therein a secondary oil coalescer/collector 68, suitably in the form of a pad of stainless steel wool. The pads 68 are sandwiched between and held in place by vertically spaced, relatively coarse, suitably stainless steel upper and lower screens 69 and 70, respectively, the lower screens conveniently seating on rib-connected bottom flanges 71 instanding into the apertures and the upper screen suitably a single screen substantially covering the top of the mounting 40 and seated in and pop-riveted to the tops of the hub 55 and rim portion 66 of the upper mounting member 41 and also serving as a backing for the return springs 63 of the

- 14 -

**0073895**

bypass valves 60. If, as in the illustrated embodiments, the housing 2 has a canister 12 in the central bore 5 above the coalescer unit 37, the upper mounting member 41 conveniently seats the lower end of the canister on or in a peripheral or rim flange 72 integral with and upstanding from the rim portion 66.

When, as illustrated, the housing 2 is equipped or fitted with the preferred internal drain valve 15 operated by gas pressure on the differential piston 16 for both closing and opening the bottom drain port 6 and actuating gas for opening the valve is supplied to its differential piston through the supply pipe 25 suspended from the housing's top wall 26 and extending downwardly therefrom axially of the central bore 5 to the differential piston, the supply pipe forms a convenient mounting or support for the oil separator 37 and therethrough the canister 12 and any contents of the canister. To that end, the preferred bolt 52 connecting the upper and lower parts 41 and 42 of the mounting 40 of the oil separator 37 is hollow and slideably receives the pipe in an axial bore 73 and the lower part of the pipe projecting between the connecting bolt and the cap 24 for the differential piston 16, is externally threaded for mounting a wing nut 74 adapted to engage or abut and turn against the lower end of the connecting bolt for supporting the oil separator 37 in the desired vertical position in the bore 5.

Alike in the foregoing respects and also in being alternated between decontaminating and purge cycles, preferably by a timer-controlled solenoid-actuated valve control unit indicated as 75 and conveniently mounted on the .housing's top wall 26 and controlling the supply of actuating compressed gas to the drain valve 15 through the supply pipe 25, the first and second embodiments of Figures 1 and 2, except that both have a canister 12, differ in the contents of the bore 5 above or downstream of the oil separator 47.  In the desiccant type apparatus of the first embodiment of Figure 1, the canister 12 preferably is part of a canister-compactor assembly 76, such as disclosed in Frantz et al co-pending U.S. application Serial No. 196,547, filed October 14, 1980, in which the canister is loaded with a bed or column 77 of a preferably molecular sieve particulate or beaded desiccant, between a bottom or lower stationary perforated plate 78 spaced above the upper screen 69 of the mounting 40 of the oil separator 37 and an upper or top, perforated, floating or pressure plate 79. As in that application, the assembly 76 includes a pneumatic compactor 80 mounted, fitted or incorporated in the top of the canister 12.  Automatically pressurized by decontaminated compressed gas in the upper part of the housing 2 received in a housing 81 of a downwardly acting differential piston 82 through an inlet check valve 83, the pneumatic compactor 80 applies a predetermined constant downward force through the floating pressure plate for compacting the desiccant bed 77.  A sleeve 84 in the canister-compactor assembly 76 and slidably receiving the supply pipe 25, facilitates assembly of the apparatus.

In the first embodiment, the desiccant 77 in the canister 12 serves as a decontaminating medium or agent for drying compressed gas passing upwardly therethrough in a decontaminating cycle of the apparatus by adsorbing moisture entrained in the gas in part on and mainly in pores of the desiccant particles.  In turn, in a purge cycle of the apparatus, the desiccant 77 is regenerated and desorbed of moisture collected in the preceding decontaminating cycle, by a reverse flow of decontaminated gas supplied from a suitable source, such as a separate purge tank (not shown) or a companion decontaminating apparatus (not shown) of a dual apparatus assembly, and released under relatively low pressure into the upper part of the housing 2 for reverse or backflow downwardly through the desiccant bed and the oil separator 37 to the drain port. The periodic regeneration of the desiccant, when conducted before the bed has been saturated with moisture, enables the desiccant to be used over an extended period before the canister 12 is reloaded or recharged with fresh desiccant and such extended life is readily obtainable when the cycling is timer-controlled for predetermining the durations of the decontaminating and purge cycles, which, suitably, may be on the order of about two minutes each.

A difficulty with using a particulate desiccant for drying compressed gas, is that, if produced, as usual, by a compressor, the gas contains both water and oil and, when the pores of the desiccant particles are the size to adsorb water molecules, they are too small to pass oil molecules. Thus, any oil particles entrained in the compressed gas when it reaches the desiccant, will coat and plug the pores of the desiccant particles and rapidly reduce the efficiency of the desiccant to adsorb moisture. Therefore, it is of prime importance, not only to protect any devices, such as air brakes, to be operated by compressed gas discharged or issued from the outlet port 4, but also to maintain the adsorption efficiency of the desiccant, that the oil separator 37 prevent oil from passing from it upwardly to the desiccant bed 77 and this the preferred separator accomplishes in the manner hereinafter to be explained.

As previously explained, in the purge cycle of the apparatus of both embodiments, the bottom drain port 6 is open to drain from the housing any contaminants collected in the sump 7 during the preceding decontaminating cycle, along with the purge gas applied during the purge cycle and any contaminants released by that gas from the desiccant bed 77 or the oil separator 37. If, as in the apparatus of the first embodiment, the purge cycle is of substantial duration, such as the above-mentioned two minutes, the inlet and outlet ports 3 and 4 must be closed during a purge cycle, the inlet port preferably before the drain port 6 is opened, to prevent an excessive loss through the drain port of compressed gas from the system in which the apparatus is connected. Accordingly, for the necessary operation during both decontaminating and purge cycles, the inlet and outlet ports 3 and 4 are valved, suitably by valving such as disclosed in Frantz patent No. 4,097,248, in which the valves for the ports are normally open valves open during a decontaminating cycle. For a purge cycle, the outlet port valve is closed by back pressure on opening of the drain port 6 and the inlet port valve is closed by actuating gas readily controlled in the time and duration of its application to the inlet valve by the preferred timer-controlled solenoid-actuated valve control unit 75, also controlling the application of actuating gas to the drain valve 15 through the supply pipe 25 for opening the drain port 6.

By contrast with the apparatus of the first embodiment of Figure 1, that of the second embodiment of Figure 2 contains no desiccant or other drying medium, lacking which it cannot reduce below saturation the moisture content of compressed gas passed or discharged from the outlet port 4. Instead, as exemplary of decontaminating apparatus of the non-desiccant or non-drying type, the illustrated content of the canister 12 is a paper filter element 85 suitable as a final filter for filtering fine solid particles remaining in the compressed gas when it has passed through the oil separator 37.

The drain valve 15 of this embodiment differs from that of the first in being double-headed by having on the piston rod 29 a pair of opposed, alternately seating valve heads vertically bracketing or embracing the drain port 6, one the upwardly seating valve head 30 normally closing the drain port in both embodiments and the other an upper, normally unseated, valve head 86 downwardly seating against an upwardly facing seat 87 about the drain port and adapted to close the drain port a brief interval after it has been opened by unseating the valve head 30. With this double valve-headed drain valve 15, the drain port will be open for brief intervals during advance and retract strokes of the differential piston 16 in response, respectively, to actuation and deactuation of the drain valve 15, and both the inlet and outlet ports 3 and 4 can remain open during a purge cycle without excessive loss of compressed gas. At the outset of the purge cycle, the second embodiment depends for purging on the compressed gas contained in the housing 2 at the end of the previous decontaminating cycle, the primary source of which on a volume basis is the gas contained in the canister 12. On closing of the drain port by the upper valve head 86, the supply of compressed gas in the housing is quickly replenished by the compressed gas received through the open inlet port and it is the replenished gas that serves as purge gas in the brief interval in which the drain port is reopened when the drain valve 15 is deactuated.

The factors critical to the efficient operation of the previously described preferred oil separator 37 common to both of the illustrated embodiments, are the interposing of the primary or sole coalescer unit 38 in the paths of both the forward flow between the inlet and outlet ports 3 and 4 of the gas being decontaminated and the back, reverse or counter-flow of purge gas from above or downstream of the oil separator to the drain port 6, that the coalescer unit be so mounted in the bore 5 of the housing 2 as to drain separated oil particles by gravity to the sump 7 out of the flow path of the incoming, forward flowing contaminated gas so as not to be reentrained by the gas, that the gas being decontaminated and the purge gas flowing in opposite directions through the oil separator be forced or restricted to flow through the thickness of the decontaminating unit, that the thickness of the unit and timing of the decontaminating and purge cycles be such as to prevent entrained oil from penetrating or passing through the separator unit during a decontaminating cycle and backwash separated oil toward the outside or leading surface of the unit during a purge cycle, and that the separator unit be adapted to bypass the contaminated gas past the coalescer unit should the unit become so clogged with oil or other contaminants as to obstruct passage of gas therethrough. These several factors are all met or satisfied by the preferred oil separator 37.

Mounted vertically, coaxially or concentrically of the bore 5 and spaced inwardly from any surrounding surface, such as that of the lower part 9 of the housing 2, and seated in vertically spaced and aligned, opposed or confronting annular seats in the mounting 40, with the lower seat 45 interrupted by the plurality of drain holes 46, the coalescer unit 38 is adapted for gravity drainage and to drain coalesced droplets of oil from its lower end 43 through the drain holes to the sump 7. The coalescer unit 38 presenting or exposing an outside or outer face or surface 88 to incoming, forwardly flowing contaminated gas and an inside or inner face or surface 89 to reverse or backflowing purge gas and the bottom of the oil separatoe 37 being closed by the lower member 42 of the mounting 40 except for the drain holes 46 and bypass ports 48, of which the drain holes are filled and effectively closed by coalesced oil particles separated by and draining from the coalescer unit 38 and the bypass ports normally closed by the check valves 60, the flow paths through the oil separator 37, available to both the forward flowing contaminated gas and reverse or backflowing purge gas in the normal operation of the apparatus, are laterally through the thickness of the sidewall 39 of the coalescer unit. Even when the coalescer unit 38 is made of the preferred multi-layered knitted wire mesh, knitted of relatively inert or impervious wire, such as stainless steel, and, under the preferred timer control by the control unit 75, the decontaminating cycle is of limited or relatively short duration, the coalescer unit's sidewall 39 must be of substantial thickness to prevent it from being penetrated by or passing oil particles in the forward flowing gas passing therethrough and for that purpose and a decontaminating cycle of about two minutes, the wall thickness of the coalescer unit suitably is on the order of 1/2 inch.

The backwashing of the coalescer unit 38 by the backflowing purge gas in a purge cycle also markedly increases the effectiveness of the unit in preventing oil separated as coalesced droplets or particles from penetrating or passing through it, by washing or forcing coalesced droplets in the unit forwardly away from its inside or inner surface 89 toward and in part through its outside or outer surface 88.

As illustrated, the oil separator 37 may include secondary coalescer/collector or separator units or elements, suitably in the form of the stainless steel wool pads 68, as double insurance against oil passing from the oil separator to the outlet port 4 either directly or through any decontaminating medium in the housing 2 above the oil separator, such as the desiccant 77 of the embodiment of Figure 1 or the paper filter 85 of the embodiment of Figure 2. By using pads 68 sufficiently loosely packed to freely pass gas and seating them in and across the through inlet/outlet openings 67 in the upper member 41 of the mounting 40, the secondary units, as well as the primary coalescer unit 38, are interposed in the paths of both the gas being decontaminated and the purge gas and, by backwashing by the purge gas during a purge cycle, are purged of any oil particles they may have collected during the previous decontaminating cycle.

When the improved decontaminating apparatus 1 contains in its housing 2 both the preferred oil separator 37 and the preferred internal drain valve 15 for closing the housing's bottom drain port 6, the heated contaminated gas received through the inlet port 3 from an associated compressor (not shown), in flowing through the housing, usually will provide sufficient heat inside the housing 2 to prevent freezing or congealing of any contaminants collected in the sump 7 during a decontaminating cycle when the housing is exposed to subfreezing temperatures. However, for installations, such as in diesel locomotives, likely to be exposed to severely low temperatures, the housing's bottom cap 13 can be fitted in the area of the drain port 6 with a temperature sensitive heater, such as used in Frantz patent No. 4,113,451 for heating an external drain pipe.

From the above detailed description it will be apparent that there has been provided improved apparatus for decontaminating compressed gas controlled to alternate between decontaminating and purge cycles, which in a decontaminating cycle separates fine mist and larger oil particles from contaminated gas by a tubular coalescer unit of an oil separator disposed vertically in the paths of both compressed gas undergoing decontamination and a reverse flow of substantially oil-free purge gas and is purged of separated oil by combined gravity drainage during decontaminating and purge cycles and backwashing by the purge gas during a purge cycle. The improved apparatus contains the oil separator in a housing having a bottom-opening drain port and also containing an internal drain valve for opening and closing the drain port, the valve being operated in both opening and closing by gas pressure and held closed during a decontaminating cycle by the pressure of compressed gas in the housing undergoing decontamination. It should be understood that the described and disclosed embodiments are merely exemplary of the invention and that all modifications are intended to be included that do not depart from the spirit of the invention and the scope of the appended claims.

Having now described by invention, I claim:

1. Apparatus for decontaminating compressed gas, comprising housing means having inlet, outlet and drain ports and containing oil separator means, means for alternating said housing means between decontaminating and purge cycles for respectively passing contaminated gas from said inlet port in one direction through said oil separator means to said outlet port and passing substantially oil-free purge gas in the reverse direction through said oil separator means to said drain port, said oil separator means including a tubular coalescer unit having interposed in the paths of flow of said contaminated and purge gases a vertically disposed side wall for alternately passing said gases laterally therethrough, said side wall therein coalescing fine particles of and separating oil from said contaminated gas during a decontaminating cycle and being purged of separated oil by gravity drainage during decontaminating and purge cycles and backwashing by said purge gas during a purge cycle.

2. Decontaminating apparatus according to claim 1, wherein the drain port is a bottom drain port and including an internal drain valve operated by gas pressure in both opening and closing the drain port and held in closed position during a decontaminating cycle by the pressure of contaminated gas in the housing means.

3. Decontaminating apparatus according to claim 2, wherein the drain valve is mounted in the housing means beneath the oil separator means and includes a vertically acting differential piston to which gas pressure for operating the valve is applied, and a downwardly opening upwardly closing valve head below the drain port and connected for movement therewith to said differential piston for closing the drain port during a decontaminating cycle.

4. Decontaminating apparatus according to claim 3, wherein the drain valve includes a second valve head opposed to and vertically spaced above the first-named valve head and therewith bracketing the drain port, said valve heads alternately seating for closing the drain port on advance and retract strokes of the differential piston and limiting to said strokes opening of the drain port during a decontaminating cycle.

5. Apparatus according to claim 1, wherein each of the ports of the housing means is valved, the housing means is vertically disposed, and the oil separator means is contained in a central bore of the housing means and includes mounting means for mounting the coalescer unit in and coaxially of said bore, and said mounting means is normally closed at the bottom for limiting to the coalescer unit the flow paths of the contaminated and purge gases through the oil separator means during the decontaminating and purge cycles.

6. Decontaminating apparatus according to claim 5, wherein the coalescer unit is a cylindrical tube the side wall whereof is formed of multi-layered knitted wire mesh.

7. Decontaminating apparatus according to claim 6, wherein the mounting means mounts the side wall of the coalescer unit in opposed vertically spaced and aligned upper and lower seats and said lower seat is interrupted by a plurality of circumferentially spaced vertically opening drain holes for passing from a lower end of the side wall oil separated by and drained by gravity from the side wall.

8. Decontaminating apparatus according to claim 7, wherein the purge gas in backwashing the side wall of the coalescer unit during a purge cycle forces separated oil in the side wall outwardly from the inside toward the outside of the wall.

9. Decontaminating apparatus according to claim 8 wherein the decontaminated and purge gases in passing through the coalescer unit pass between upper and lower members of the mounting means and through opening means in said upper member.

10. Decontaminating apparatus according to claim 9, including secondary oil coalescing/separating means mounted in the opening means for preventing any oil particles escaping from the coalescer unit from passing from the oil separator means upwardly toward' the outlet port.

11. Decontaminating apparatus according to either of claims 3 and 4, wherein actuating gas for opening the drain port by downwardly unseating the valve head below the drain port is supplied to the differential piston of the drain valve through a supply pipe centered on a central bore and suspended from a top wall of the housing means and extending downwardly from said top wall to the differential piston, and wherein said supply pipe extends centrally downwardly through a mounting means of the oil separator means and threadedly mounts therebelow means for supporting the oil separator means in operative position in said bore.

12. In apparatus for decontaminating compressed gas, the combination with a housing having inlet and outlet ports and a bottom drain port, of an internal drain valve contained in a central bore of said housing and having a differential piston operated by gas pressure for opening and closing said drain port, said drain valve during a decontaminating cycle of alternate decontaminating and purge cycles of the apparatus being held in port-closing position by the pressure of gas in said housing undergoing decontamination.

13.  In decontaminating apparatus according to claim 12, wherein the drain valve includes a downwardly opening upwardly closing valve head below the drain port and connected to the differential piston for movement vertically therewith downwardly and upwardly relative to the drain port respectively on advance and retract strokes of the piston.

14.  In decontaminating apparatus according to claim 13, where the drain valve includes a second valve head opposed to and spaced above the first-named valve head and therewith bracketing the drain port, said valve heads alternately seating on advance and retract strokes of the piston for opening the drain port in a purge cycle only during said strokes.

15.  Decontaminating apparatus of the desiccant type according to claim 1, wherein the housing means contains between the oil separator means and the outlet port a desiccant for adsorbing entrained moisture from the gas being decontaminated, the inlet, outlet and drain ports are valved, the apparatus is cycled between decontaminating and purge cycles by timer-controlled control means, the inlet and outlet ports are open and the drain valve closed during a decontaminating cycle, the inlet and outlet ports are closed and the drain port open during a purge cycle, and the purge gas is decontaminated gas supplied from a source separate from said housing means.

16.  Decontaminating apparatus of the non-desiccant type according to claim 1, including a drain valve having opposed spaced valve heads vertically bracketing the drain port and alternately seating for opening said port in a purge cycle only during actuation and deactuation of said valve, the apparatus is alternated between decontaminating and purge cycles by timer-controlled control means, the inlet and outlet ports are open during both decontaminating and purge cycles, the drain port is closed during a decontaminating cycle and opened in a purge cycle during actuation and deactuation of the drain valve, and the purge gas is compressed gas in the central bore above and decontaminated of oil by the oil separator means.

FIG. 1.

FIG. 2.

FIG. 3.

*FIG. 4.*

*FIG. 6.*

FIG. 5.

## EUROPEAN SEARCH REPORT

European Patent Office

# DOCUMENTS CONSIDERED TO BE RELEVANT

| Category | Citation of document with indication. where appropriate, of relevant passages | Relevant to claim | CLASSIFICATION OF THE APPLICATION (Int. Cl. ³) |
|---|---|---|---|
| A | GB-A-1 439 362  (AEROQUIP AG.)<br><br>* claims 1-3 ; page 2, line 119 to page 3, line 16 ; page 3, lines 46-80 ; figures 1, 2 * | 1-4,8, 9,12, 13,15 | B 01 D 46/24<br>B 01 D 46/42 |
| A | US-A-3 876 400  (V.L. FRANTZ)<br><br>* claims 1, 3-5 ; column 2, line 34 to column 3, line 20 ; column 5, lines 11-29 ; figure 1 * | 1,3,7, 12,14 | |
| A | US-A-4 026 685  (A.R. GRIX)<br><br>* claims 1, 2, 4; column 4, lines 44-68; figure 3 *1 | 1-3,8, 12,15 | |

TECHNICAL FIELDS SEARCHED (Int. Cl. ³)

B 01 D 46/00
B 01 D 50/00

The present search report has been drawn up for all claims

| Place of search<br>BERLIN | Date of completion of the search<br>29-09-1982 | Examiner<br>BERTRAM H E H |
|---|---|---|